# EUROPEAN PATENT APPLICATION

(11) **EP 1 079 548 A1**
(43) Date of publication of application: **28.02.2001**
(21) Application number: 99830526.2
(22) Date of filing: 19.08.1999
(51) Int. Cl.: H04B 7/26, H04Q 7/32, H04Q 7/36

(54) **Add-on radio repeater for a radio access terminal of a TDMA point-multipoint radio communication system**

(71) Applicant: TELEFONAKTIEBOLAGET LM ERICSSON, 126 25 Stockholm (SE)
(72) Inventor: Nascimbene, Andrea, 27020 Torre D'Isola (Pavia) (IT)
(74) Representative: Faggioni, Carlo Maria, Dr. Ing.

(57) **Abstract**

The functionality of a repeater is given upon request to an ordinary radio access terminal, by addition of an external unit with a new antenna and with suitable co-ordination means, which does not affect the terminal itself.

## Description

This invention relates to a new way of providing add-on repeater in TDMA point-multipoint radio systems, allocating the functions to already existing components of these systems.

### PRIOR ART AND RELATED PROBLEMS

It is well known that, when dealing with connections between two radio devices working at high frequencies (> 10 GHz), a Line-Of-Sight (LOS) condition is needed between the two antennas. Unfortunately (especially within the urban environment) this condition might be difficult to be provided for all sites.

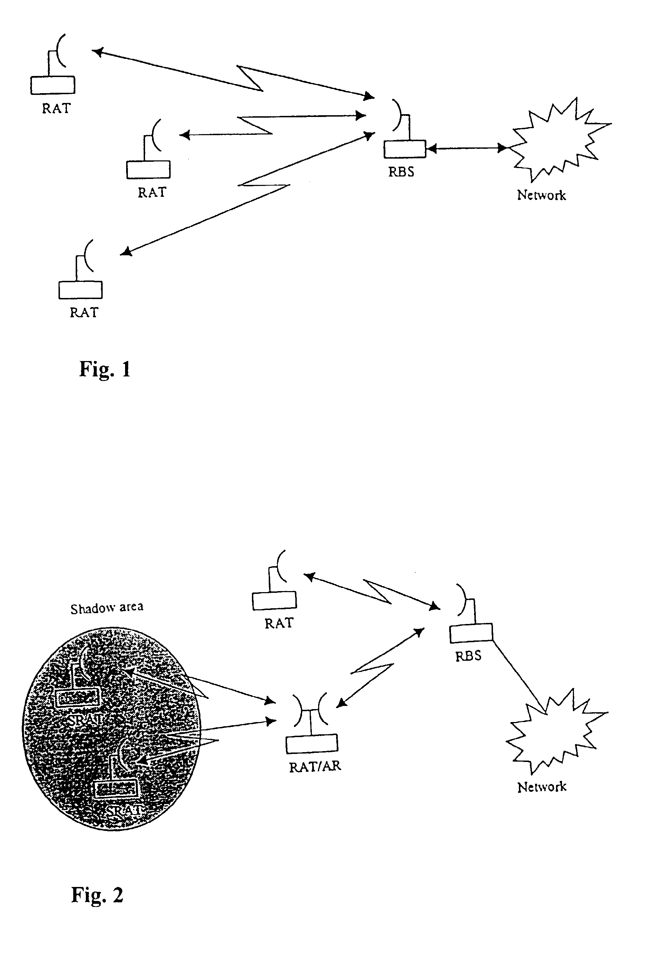

Problems may be even bigger with point-to-multipoint (PMP) systems, as the one represented in Fig. 1 of the annexed drawings by way of example, where a radio base station (RBS) of a network (N) is initially connected to a number of radio access terminals (RAT) in a specific area. When subsequently one wants to add as many new terminals (RAT) as needed to connect new users to the network, even when worked according to an accurate planning, situations may arise in which providing new connections could be impossible, since the possibility of providing a line of sight condition is not available (e.g. due to the presence of buildings or to the pattern of the land) or no longer available (e.g. because new buildings have been built), or because errors in the previous planning of covering the interested area have been done, or because the same area was not of interest.

In such a case - which is represented in Fig. 2 - an area which is not covered by the radio base station (RBS) is referred to as "shadowed area" (therefore, it is represented shadowed in figure) and radio access terminals (RAT) which are desired to be installed in such an area are referred to as shadowed radio access terminals (SRAT).

Up to now, two solutions to the above referenced problem have been considered and both of them are unsatisfactory:
- to over-provision the access network, so that areas with expected coverage problems are served by more than one RBS;
- to move the RBS to a different site.

The first solution involves, of course, higher costs per access point and it anyway does not guarantee that adding new radio access terminals (RAT) will be possible (for instance due to the possibility of new buildings, not existing upon the planning of the coverage).

Also the second solution is unsatisfactory: in fact, to move the radio base station (RBS) to a different site is difficult, as all antennas have to be re-aligned and all of radio access terminals (RAT) have consequently to be put out of working before their relocation.

### SUMMARY OF THE INVENTION

Therefore, the main object of this invention is to provide a more simple and effective solution to the above problems, by means of a so called "radio access terminal/add-on radio repeater" (RAT/AR) which ensures an easy and fast arrangement, while leaving the already existing arrangement unchanged.

The repeater functionality is of course not new: indeed it is very largely used in the world. Nevertheless, the new idea is to have an ordinary Radio Access Terminal (RAT) that might be used as a repeater with a very low effort and without impacting the existing access network, so as to be able to reach other terminals in "shadow areas".

More in depth, the invention refers to an add-on radio repeater (RAT/AR) for TDMA point-multipoint radio communication systems, characterised in that it consists of an ordinary radio access terminal (RAT), to which the functionality of a repeater is given upon request.

Suitably, the functionality of a repeater is given to the said ordinary radio access terminal pre-existing and pre-installed in the network by adding an external unit, which comprises a new antenna and suitable co-ordination means. Said external unit does not affect the radio access terminal (RAT) and can be removed in any time.

### BRIEF DESCRIPTION OF THE DRAWINGS

The invention is now described more in detail in the following, with reference to the annexed drawings, wherein:
Fig. 1 schematically shows a conventional point-multipoint TDMA radio communication system, of the above referenced kind;
Fig. 2 schematically explains the problem of enlarging a conventional point-multipoint TDMA radio communication system, such as the one of Fig. 1, also to which reference has been made above; and
Fig. 3 schematically shows a point-multipoint TDMA radio communication system according to this invention, wherein an add-on repeater is used, which consists of a radio access terminal (RAT) to which the functionality of a repeater is given.

The invention applies to TDMA access networks, namely to networks which are based on time division multiple access. With such a kind of network, the radio base station (RBS) continuously transmits in the direction from itself to radio access terminal (RAT) (downlink direction), while in the opposite direction (from RAT to RBS, uplink direction) radio access terminals (RAT) send information only when they are allowed to do that, based on a pre-defined algorithm or on an explicit permits. The Media Access Control function (MAC) inside RAT determines whether the terminal is allowed to transmit. Conversely, in FDMA and CDMA networks, all transmitters are, or may be, constantly on.

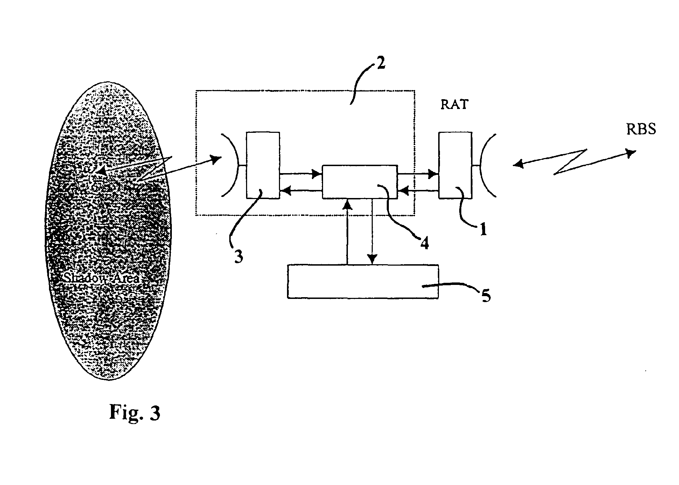

The add-on radio repeater RAT/AR according to the invention basically consists of an ordinary RAT 1 (Fig. 3) also comprising a modem 5. When the repeater functionality is needed, an external unit 2 with a new antenna 3 is added thereto together with appropriate combining or co-ordination functions 4. This unit may be later removed in case the repeater function of the terminal is not needed any more (for instance because new RBS have been installed, covering the shadow area). The other parts components of the RAT 1 are not affected for these modifications, thus minimising implementation and installation complexity and making it possible to reuse the terminal 1 as an ordinary one, whereas it is not required thereto to play the role of a repeater.

The add-on repeater (RAT/AR) behaves towards the RAT's in the Shadow Area (SRAT) as it if it were the RBS:
- in the downlink direction, the added-on transmitter continuously transmits the same information received from the RBS, without any change;
- in the uplink direction, data coming from SRAT are forwarded to the RBS, still without changes;
- since SRAT consider themselves as directly connected to the RBS, the ordinary TDMA access mode is used to prevent collision (algorithm or permit).

The approach used by this invention involves neither the possible modem 5, nor the MAC functions of the RAT 1 to which the repeater functionality has been added: the rest of the RAT/AR equipment of Fig. 3 simply acts as the terminal 1 did before. In other words, the repeater functionality is completely transparent to the equipment of the terminal 1 and especially to the MAC that has not to manage any special protocol to allow RAT in the shadow area to communicate with the RBS.

The invention allows to achieve important improvements and a number of benefits, like:
- to achieve a higher degree of functionality -from RAT to RAT/AR - of the ordinary radio access terminals more easily;
- operators do not need to make reference to very expensive and detailed high-resolution maps in order to plan their network;
- possible unreliable coverage predictions can be corrected through RAT/AR devices;
- future proof system deployment, even in case new buildings are erected;
- the line-of-sight problem can be considered as solved to a percentage very close to 100%;
- operators may increase their business, since virtually all customers are reachable;
- operators will avoid promotion and negotiation activity with unreachable customers and/or any image drop when contracts already signed cannot be respected, thus increasing the system marketing value.

It is understood that other embodiments and/or modifications of the add-on radio repeater (RAT/AR) are possible, still in the scope of the present invention.

## Claims

1. Add-on radio repeater (RAT/AR) for TDMA point-multipoint radio communication systems, characterised in that it consists of an ordinary radio access terminal (RAT), to which the functionality of a repeater is given upon request.

2. Add-on radio repeater (RAT/AR) as claimed in claim 1., wherein the functionality of a repeater is given to the said ordinary, pre-existing and pre-installed radio access terminal by means of adding an external unit, comprising a new antenna and suitable co-ordination means.

3. Repeater as claimed in claim 2., wherein the said external unit does not affect the radio access terminal (RAT) and can be removed at any time.
